**Europäisches Patentamt**

**European Patent Office**

**Office européen des brevets**

(11) Veröffentlichungsnummer : **0 547 507 B1**

## (12) EUROPÄISCHE PATENTSCHRIFT

(45) Veröffentlichungstag der Patentschrift :
**16.03.94 Patentblatt 94/11**

(21) Anmeldenummer : **92121074.6**

(22) Anmeldetag : **10.12.92**

(51) Int. Cl.⁵ : **C08F 218/10,** C09J 131/02

(30) Priorität : **13.12.91 DE 4141168**

(43) Veröffentlichungstag der Anmeldung :
**23.06.93 Patentblatt 93/25**

(45) Bekanntmachung des Hinweises auf die
Patenterteilung :
**16.03.94 Patentblatt 94/11**

(84) Benannte Vertragsstaaten :
**DE DK ES FR GB IT NL SE**

(56) Entgegenhaltungen :
**EP-A- 0 017 986**
**EP-A- 0 185 356**

(54) Wässrige Kontaktkleberdispersionen, Verfahren zu deren Herstellung sowie deren Verwendung.

(73) Patentinhaber : **WACKER-CHEMIE GMBH**
**Hanns-Seidel-Platz 4**
**D-81737 München (DE)**

(72) Erfinder : **Krell, Manfred, Dr.**
**Mozartstrasse 14b**
**W-8260 Mühldorf am Inn (DE)**
Erfinder : **Huster, Wilfried, Dr.**
**Mühlbachstrasse 77**
**W-8261 Emmerting (DE)**
Erfinder : **Fischer, Joachim**
**Eichendorffstrasse 9**
**W-8261 Emmerting (DE)**

## Beschreibung

Die Erfindung betrifft wäßrige Kontaktkleberdispersionen auf der Basis von Vinylester/Acrylester-Copolymerisaten, Verfahren zu deren Herstellung sowie deren Verwendung.

Kontaktklebstoffe sind ein spezieller Typ von Klebstoffen, bei denen nach beidseitigem Auftrag des Klebstoffes auf das Substrat und einer entsprechenden offenen Wartezeit die beiden Fügeteile unter Anwendung von Druck verklebt werden. Kontaktklebstoffe kommen ähnlich wie Haftklebstoffe ausschließlich nach erfolgter Filmbildung im trockenen Zustand, insbesonders zur Verklebung von nichtsaugenden Substraten oder wenn zur Herstellung der Verklebungen auf die Verwendung von Maschinen verzichtet werden muß, zur Anwendung. Im wesentlichen unterscheiden sich Kontaktklebstoffe von Haftklebstoffen dadurch, daß Polymerfilme auf Haftkleberbasis die Fähigkeit besitzen, aufgrund ihrer viskoelastischen Eigenschaften, schon bei geringstem Druck die verschiedensten Substrate zu benetzen und an ihnen zu haften, wobei jedoch keine großen Festigkeiten aufgebaut werden. Bei Kontaktklebemitteln setzt erst, wenn die Polymerfilme zweier mit Kontaktkleber beschichteter Substrate, unter Anwendung von Druck, für wenige Sekunden miteinander in Kontakt geraten, die Diffusion der beiden Polymerfilme ineinander ein und es wird ein einheitlicher Polymerfilm gebildet.

Die unter Verwendung von Haftklebstoffen hergestellten Verklebungen besitzen daher eine deutlich geringere Klebefestigkeit (sie haften nur), vor allem direkt nach der Verbundherstellung und bei erhöhter Temperatur, als Verklebungen auf Basis von Kontaktklebemitteln. Außerdem widerstehen Verklebungen auf Basis von Haftklebstoffen im Gegensatz zu Verklebungen, die unter Verwendung von Kontaktklebstoffen hergestellt werden, keinen statischen Dauerschäl- und/oder Dauerscherbelastungen. Verklebungen, die unter Verwendung von Kontaktklebstoffen hergestellt werden, entwickeln sofort nach der Verbundherstellung eine hohe Klebefestigkeit.

Kontaktklebstoffe werden normalerweise auf der Basis Polychloropren, das in organischen Lösungsmitteln gelöst ist, hergestellt. Die Nachteile derartiger Klebstoffe sind jedoch die Toxizität und leichte Entflammbarkeit der darin enthaltenen Lösungsmittel (R.S. Whitehouse, Crit.Rep.Appl.Chem., Nr. 16, p. 2 (1987)). Es wurden daher Versuche unternommen, Kontaktklebstoffe auf wäßriger Basis herzustellen.

Die Nachteile derartiger wäßriger Dispersionen sind deren geringere Klebefestigkeiten bei Dispersionen, die auf der Basis von Polychloropren hergestellt wurden, der "kalte Fluß" bei Polyacrylatdispersionen (insbesondere im Bereich kritischer Verklebungen, z.B. Kanten) und die geringe Klebfestigkeit bzw. geringe Adhäsion bei Dispersionen auf der Basis Ethylen-Vinylacetat (E/VAc) (DE-37 37 630 A1 (US-A 4975481)).

Die Verwendung von Dipersionen auf der Basis E/VAc im Kontaktklebeverfahren kann durch den Einsatz von Weichmachern (EP 321 868 A2) verbessert werden. Ebenso gelingt eine Verbesserung der Anwendung derartiger Dispersionen bei Formulierung mit Harzen als Tackifier und Zusätzen von geringen Mengen an organischen Lösungsmitteln (EP 315 070 A2 , US 4,975,481). Ein anderes Verfahren beschreibt das Aufschäumen des aufgetragenen Klebstoffes (Basis Ethylen/Vinylacetat) vor Verkleben der beiden Fügeteile (US-A 4,960,802). Die Verwendung eines Gemisches aus zwei Dispersionen mit niedriger und hoher Glasübergangstemperatur wird in der DE 39 20 935 A1 beschrieben. Die Anwendung derartiger Dispersionen als Kontaktklebstoff führt zu guten Schälfestigkeiten, über die statische Belastbarkeit der Verklebungen wird keine Aussage gemacht. Die Herstellung eines Kontaktklebstoffes, dessen Copolymeres sich durch eine sehr breite Molekulargewichtsverteilung auszeichnet, wird in US-A 4,477,622 beschrieben.

In DE 29 15 887 A1 (US-A 4322516), DE 34 46 565 A1 (US-A 4831077) und DE 35 31 601 A1 (US-A 4997879) wird die Herstellung von Dispersionen auf der Basis von Ethylen/Vinylacetat oder Ethylen/Vinylacetat/Acrylat beschrieben, die sich durch besonders gute Haftung und erhöhte Wärmestandfestigkeit auszeichnen. Derartige Dispersionen sind aber nicht ohne Formulierung mit weiteren Hilfsstoffen zur Anwendung als Kontaktklebstoff geeignet und zeigen insbesondere keine Widerstandskraft gegen statische Dauerbelastung durch Scherung oder Abschälen.

Es bestand daher die Aufgabe, einen wäßrigen Kontaktklebstoff zu finden, der bereits ohne weitere Formulierungen neben einer guten Adhäsion auf verschiedenen Substraten und hoher Kohäsion, insbesondere in der Wärme, zu schälstand- und/oder scherstandfesten Verklebungen führt.

Die Aufgabe, einen schälstand- und scherstandfesten Kontaktklebstoff zur Verfügung zu stellen, konnte überraschender Weise dadurch gelöst werden, daß in Vinylester/Acrylsäureester-Copolymerisaten Methacrylsäureester von aliphatischen Alkoholen mit 4 bis 12 C-Atomen in den angegebenen Mengen copolymerisiert wurden.

Gegenstand der Erfindung sind wäßrige Kontaktkleberdispersionen, die, bezogen auf das Gesamtgewicht der Dispersion, 40 bis 70 Gewichtsprozent eines Copolymerisates enthalten, welches nach dem Emulsionspolymerisationsverfahren hergestellt wird, dessen Temperaturbereich des Glasüberganges im Bereich von -20 bis +20°C liegt und dessen K-Wert nach Fikentscher zwischen 50 und 180 liegt, dadurch gekennzeichnet, daß das Copolymerisat

a) 40 bis 70 Gew.-% Vinylester von aliphatischen Carbonsäuren mit 2 bis 12 C-Atomen,
b) 10 bis 40 Gew.-% Acrylsäureester von aliphatischen Alkoholen mit 4 bis 12 C-Atomen,
c) 8 bis 15 Gew.-% Methacrylsäureester von aliphatischen Alkoholen mit 4 bis 12 C-Atomen,
d) 0,1 bis 3 Gew.-% ethylenisch ungesättigte, vernetzend wirkende Verbindungen,
e) 0,1 bis 5 Gew.-% ethylenisch ungesättigte Carbonsäuren,
f) 0,1 bis 2 Gew.-% substituierte und unsubstituierte (Meth)acrylamide,
g) 0,5 bis 3 Gew.-% ethylenisch ungesättigte Hydroxyalkylfunktionelle Verbindungen,
h) 0,5 bis 3 Gew.-% ethylenisch ungesättigte Sulfate und/oder Sulfonate

enthält, wobei die Angaben in Gewichtsprozent jeweils auf das Gesamtgewicht des Copolymerisats bezogen sind und sich die Anteile in Gewichtsprozent im Copolymerisat auf 100 Gew.-% aufaddieren.

Bevorzugte Vinylester (a) sind Vinylacetat, Vinylpropionat, Vinyllaurat und Vinylester der Versatic-Säuren (gesättigte α-verzweigte Monocarbonsäuren), insbesondere mit 9 C-Atomen oder Gemische der genannten Monomere. Besonders bevorzugt wird Vinylacetat allein oder im Gemisch mit einem oder mehreren weiteren Vinylestern in Anteilen von 25 bis 55 Gew.-%, insbesondere von 30 bis 50 Gew.-%, und Vinyllaurat im Gemisch mit einem oder mehreren weiteren Vinylestern in Anteilen von 5 bis 30 Gew.-%, insbesondere von 10 bis 25 Gew.-%.

Bevorzugte Acrylsäureester (b) sind n-Butylacrylat und 2-Ethylhexylacrylat oder deren Gemische. Vorzugsweise werden diese in Anteilen von 10 bis 40 Gew.-%, besonders bevorzugt 15 bis 30 Gew.-%, eingesetzt.

Bevorzugt Methacrylsäureester (c) sind Methylmethacrylat, tert.-Butylmethacrylat, Ethylmethacrylat, n-Propylmethacrylat, i-Propylmethacrylat oder Gemische der genannten Monomere. Besonders bevorzugt wird Methylmethacrylat. Die Methacrylsäureester werden vorzugsweise in Anteilen von 8 bis 12 Gew.-% eingesetzt.

Bevorzugte ethylenisch ungesättigte, vernetzend wirkende Verbindungen (d) sind beispielsweise Acrylamidoglykolsäure (AGA), Methylacrylamidoglykolsäuremethylester (MAGME), 2-Acrylamido-2-Methylpropansulfonsäure (AMPS), N-Methylolacrylamid (NMAA), N-Methylolmethacrylamid, N-Methylolallylcarbamat, Alkylether oder Ester des N-Methylolacrylamids, des N-Methylolmethacrylamids oder des N-Methylolallylcarbamats. Besonders bevorzugt wird N-Methylolacrylamid (NMAA).

Als ethylenisch ungesättigte Carbonsäuren (e) werden vorzugsweise α,β-ungesättigte Carbonsäuren, besonders bevorzugt Acrylsäure und Methacrylsäure, insbesondere Acrylsäure eingesetzt.

Als Komponente (f) wird vorzugsweise Acrylamid eingesetzt. Der bevorzugte Anteil beträgt von 0,2 bis 1,5 Gew.-%.

Als Hydroxyalkyl-funktionelle Verbindungen (g) werden vorzugsweise 2-Hydroxyethylacrylat und 2-Hydroxypropylacrylat eingesetzt, besonders bevorzugt wird 2-Hydroxyethylacrylat.

Als ethylenisch ungesättigte Sulfate und Sulfonate (h) kommen vorzugsweise die Alkalisalze der Vinylsulfonsäure zur Verwendung.

Ein weiterer Gegenstand der Erfindung ist die Herstellung der erfindungsgemäßen Kontaktkleberdispersionen nach dem Emulsionspolymerisationsverfahren. Die Komponente a) wird dabei vollständig vorgelegt oder teilweise dosiert, vorzugsweise vollständig vorgelegt. Die Komponenten (b) und (c) werden zu wenigstens 50 Gew.-% erst während der Reaktion dosiert. Die Komponente (d) kann ebenfalls entweder teilweise vorgelegt und dosiert, oder vollständig dosiert werden, bevorzugt wird sie vollständig dosiert. Die Komponente (e) kann ebenfalls vollständig dosiert, teilweise vorgelegt und teilweise dosiert oder vollständig vorgelegt werden. Die Komponenten (f) und (h) werden vollständig vorgelegt, während Komponente (g) vollständig dosiert wird.

Die Polymerisation wird unter Verwendung üblicher wasserlöslicher Radikalbildner gestartet. Dies sind insbesondere Persulfate (z.B. Ammoniumpersulfat, Kaliumpersulfat), Hydroperoxide (z.B. t-Butyl-Hydroperoxid) und Perphosphate. Der bevorzugte Anteil dieser Radikalbildner beträgt 0,05 bis 3 Gew.-% bezogen auf die Gesamtmonomermasse. Diese Verbindungen können entweder direkt durch Temperaturerhöhung oder bei niedrigeren Temperaturen durch Einsatz von Reduktionsmitteln aktiviert werden. Beispiele für derartige Reduktionsmittel sind Natriumformaldehydsulfoxylat, Natriumsulfit, Natriumhydrogensulfit oder Dithionit.

Bevorzugter pH-Bereich für die Polymerisationsreaktion ist von 2 bis 5,5. Die pH-Einstellung bzw. pH-Regelung erfolgt mit Säuren, z.B. Schwefelsäure, Ameisensäure, Essigsäure und Basen, z.B. Ammoniak, Natronlauge, Kalilauge, Amine oder durch Verwendung von Puffersubstanzen z.B. Alkaliacetat, Alkalicarbonat, Alkalidiphosphate.

Die Polymerisation wird in Gegenwart von üblichen Emulgatoren durchgeführt. Diese sind insbesondere Alkyl- und Alkylarylethoxylate, die gegebenenfalls zusätzlich mit Sulfat-, Phosphat-, Succinat- oder Sulfonatgruppen versehen sein können. Die bevorzugte Menge an diesen Emulgatoren beträgt 1 bis 5 Gew.-%, bezogen auf Gesamtmasse der Dispersion.

Die Erfindung betrifft weiterhin die Verwendung der erfindungsgemäßen Kontaktkleberdispersion als Klebemittel nach dem Kontaktverfahren. Dazu werden die zu verklebenden Substrate mit 10 bis 400 g/m², vorzugsweise 30 bis 250 g/m², der Kontaktkleberdispersion beschichtet. Es wird bei Raumtemperatur oder erhöhter Temperatur getrocknet und anschließend die Polymerfilme bei Raumtemperatur so aneinandergelegt, daß die Klebstoffbeschichtungen der Substrate miteinander in Kontakt geraten. Üblicherweise preßt man nun die zu verklebenden Substrate für mindestens 2 Sekunden, vorzugsweise 5 bis 40 Sekunden bei einem Druck von mindestens 0.05 N/mm², vorzugsweise 0.1 bis 2.0 N/mm², aneinander.

Mit den erfindungsgemäßen Kontaktkleberdispersionen lassen sich sowohl saugende wie nicht saugende Substrate, beispielsweise Metalle, Leder, Filz, Textilgewebe, Holz, Kork, Papier oder Schaumstoffe untereinander oder miteinander verkleben.

Die unter Verwendung der erfindungsgemäßen Kontaktkleberdispersionen hergestellten Verklebungen zeichnen sich durch besonders hohe Festigkeiten, schon direkt nach der Verbundherstellung, hervorragende Adhäsion und hohe Widerstandskraft gegenüber statischer Dauerbelastung aus. Im Gegensatz zu Beschichtungen auf Basis herkömmlicher lösungsmittelhaltiger Kontaktklebemitteln, die in der Regel nach 15 bis 60 Minuten verklebt werden müssen, lassen sich Beschichtungen auf Basis der erfindungsgemäßen Kontaktkleberdispersionen auch noch nach Tagen ohne große Leistungseinbuße nach dem Kontaktverfahren verkleben.

Besonders vorteilhaft ist, daß sich die erfindungsgemäßen Kontaktklebstoffdispersionen ohne zusätzlich Modifikation, wie beispielsweise Weichmacherzusatz, Tackifierzusatz oder Verbundherstellung bei erhöhter Temperatur, als wäßrige Kontaktklebstoffe beispielsweise zum Verkleben von Fußbodenbelägen, zur Herstellung von dekorativen Schichtstoffplatten, zur vollflächigen Verklebung von Schaumstoffen oder als universelle Kontaktklebstoffe für Anwendungen im DIY-Bereich (Do it yourself) einsetzen lassen.

Die nachfolgenden Beispiele dienen zur weiteren Erläuterung der Erfindung.

Beispiel 1:

In einem Reaktor, der mit Rückflußkühler, Rührer, Zudosiermöglichkeiten, Stickstoffeinleitung, sowie Heiz- und Kühlmöglichkeiten versehen war, wurden 401 g entmineralisiertes Wasser, 8 g eines Nonylphenolpolyglykolethers (mit im Mittel 23 EO-Einheiten), 3 g eines $C_{15}$-Alkylsulfonates, 18 g Natriumvinylsulfonat, 5 g Acrylamid und 9,5 g Acrylsäure vorgelegt und der pH-Wert mit konzentrierter Ammoniaklösung auf 3,5 eingestellt. In diese Lösung wurden 355 g Vinylacetat, 139 g Vinyllaurat und 49 g 2-Ethylhexylacrylat einemulgiert. Es wurde auf 50°C aufgeheizt und mit der Dosierung einer 3,5 %igen Ammoniumpersulfatlösung (10,5 g/h) und einer 2 %igen Natriumformaldehydsulfoxylatlösung (10,5 g/h) begonnen. Nach Reaktionsbeginn wurden über einen Zeitraum von 4,5 Stunden ein Gemisch von 186 g 2-Ethylhexylacrylat, 87 g Methylmethacrylat, 15 g Hydroxyethylacrylat und 14 g Acrylsäure (Dosierung 1) sowie eine Lösung von weiteren 7,5 g des Nonylphenolpolyglykolethers und 6 g N-Methylolacrylamid in 35 g entmineralisiertem Wasser kontinuierlich zudosiert. Die Dosierung der Ammoniumpersulfatlösung und der Natriumformaldehydsulfoxylatlösung wurde danach noch 2,5 Stunden lang fortgesetzt.

Nach dem Abkühlen erhielt man eine stabile Dispersion mit einem Festgehalt von 59,5 %, einem K-Wert (nach Fikentscher, 1 % in Tetrahydrofuran/Wasser 93:7 (V/V)) von 105, sowie einer Viskosität von 16000 mPa.s (Brookfield, 20 UpM).

Beispiel 2:

In einem Reaktor, der mit Rückflußkühler, Rührer, Zudosiermöglichkeiten, Stickstoffeinleitung, sowie Heiz- und Kühlmöglichkeiten versehen war, wurden 393 g entmineralisiertes Wasser, 6 g eines Nonylphenolpolyglykolethers (mit im Mittel 23 EO-Einheiten), 2,4 g eines $C_{15}$-Alkylsulfonates, 4,5 g Natriumvinylsulfonat, 4 g Acrylamid und 1,7 g Acrylsäure vorgelegt und der pH-Wert mit konzentrierter Ammoniaklösung auf 3,5 eingestellt. In diese Lösung wurden 402 g Vinylacetat, 170 g Vinyllaurat und 36 g 2-Ethylhexylacrylat einemulgiert. Es wurde auf 50°C aufgeheizt und mit der Dosierung einer 3,5 %igen Ammoniumpersulfatlösung (10,5 g/h) und einer 2 %igen Natriumformaldehydsulfoxylatlösung (10,5 g/h) begonnen. Nach Reaktionsbeginn wurden über einen Zeitraum von 4,5 Stunden ein Gemisch von 134 g 2-Ethylhexylacrylat, 101 g Methylmethacrylat, 15 g Hydroxyethylacrylat und 2,5 g Acrylsäure (Dosierung 1) sowie eine Lösung von weiteren 6 g des Nonylphenolpolyglykolethers und 18 g N-Methylolacrylamid in 36 g entmineralisiertem Wasser kontinuierlich zudosiert. Die Dosierung der Ammoniumpersulfatlösung und der Natriumformaldehydsulfoxylatlösung wurde danach noch 2,5 Stunden lang fortgesetzt.

Nach dem Abkühlen erhielt man eine stabile Dispersion mit einem Festgehalt von 60,5 %, einem K-Wert (nach Fikentscher, 1 % in Tetrahydrofuran/Wasser 93:7 (V/V)) von 111, sowie einer Viskosität von 19000 mPa.s (Brookfield, 20 UpM).

Beispiel 3:

In einem Reaktor, der mit Rückflußkühler, Rührer, Zudosiermöglichkeiten, Stickstoffeinleitung, sowie Heiz- und Kühlmöglichkeiten versehen war, wurden 417 g entmineralisiertes Wasser, 7,5 g eines Nonylphenolpolyglykolethers (mit im Mittel 23 EO-Einheiten), 3 g eines $C_{15}$-Alkylsulfonates, 4,5 g Natriumvinylsulfonat, 13 g Acrylamid und 12 g Acrylsäure vorgelegt und der pH-Wert mit konzentrierter Ammoniaklösung auf 3,5 eingestellt. In diese Lösung wurden 257 g Vinylacetat, 86 g VeoVa-9 (Vinylester von gesättigten α-verzweigten Monocarbonsäuren mit 9 C-Atomen) und 79 g 2-Ethylhexylacrylat einemulgiert. Es wurde auf 50°C aufgeheizt und mit der Dosierung einer 3,5 %igen Ammoniumpersulfatlösung (10,5 g/h) und einer 2 %igen Natriumformaldehydsulfoxylatlösung (10,5 g/h) begonnen. Nach Reaktionsbeginn wurden über einen Zeitraum von 4,5 Stunden ein Gemisch von 289 g 2-Ethylhexylacrylat, 86 g Methylmethacrylat, 15 g Hydroxyethylacrylat und 11 g Acrylsäure sowie eine Lösung von 7,5 g des Nonylphenolpolyglykolethers und 18 g N-Methylolacrylamid in 42 g entmineralisiertem Wasser kontinuierlich zudosiert. Die Dosierung der Ammoniumpersulfatlösung und der Natriumformaldehydsulfoxylatlösung wurde danach noch 2,5 Stunden lang fortgesetzt.

Nach dem Abkühlen erhielt man eine stabile Dispersion mit einem Festgehalt von 58 %, einem K-Wert (nach Fikentscher, 1 % in Tetrahydrofuran/Wasser 93:7 (V/V)) von 97,2, sowie einer Viskosität von 64000 mPa.s (Brookfield, 20 UpM).

Beispiel 4:

In einem Reaktor, der mit Rückflußkühler, Rührer, Zudosiermöglichkeiten, Stickstoffeinleitung sowie Heiz- und Kühlmöglichkeiten versehen war, wurden 421 g entmineralisiertes Wasser, 7,5 g eines Nonylphenolpolyglykolethers (mit im Mittel 23 EO-Einheiten), 3 g eines $C_{15}$-Alkylsulfonates, 24 g Natriumvinylsulfonat, 6 g Acrylamid und 12 g Acrylsäure vorgelegt und der pH-Wert mit konzentrierter Ammoniaklösung auf 3,5 eingestellt. In diese Lösung wurden 407 g Vinylacetat, 222 g Vinyllaurat und 63 g 2-Ethylhexylacrylat einemulgiert. Es wurde auf 50°C aufgeheizt und mit der Dosierung einer 4,6 %igen Ammoniumpersulfatlösung (10,5 ml/h) und einer 2,5 %igen Natriumformaldehydsulfoxylatlösung (10,5 ml/h) begonnen. Nach Reaktionsbeginn wurde über einen Zeitraum von 4,5 h ein Gemisch von 237 g 2-Ethylhexylacrylat, 110 g Methylmethacrylat, 19 g Hydroxyethylacrylat und 18 g Acrylsäure (Dosierung 1) sowie weitere 11,5 g des Nonylphenolpolyglykolethers, 0,8 g des Alkylsulfates und 7,4 g N-Methylolacrylamid in 31 g entmineralisiertem Wasser (Dosierung 2) kontinuierlich zudosiert. Die Dosierung der Ammoniumpersulfatlösung und der Natriumformaldehydsulfoxylatlösung wurde danach noch 2,5 Stunden lang fortgesetzt.

Nach dem Abkühlen erhielt man eine stabile Dispersion mit einem Festgehalt von 65,7 %, einem K-Wert (nach Fikentscher, 1 % in Tetrahydrofuran/Wasser 93:7 (V/V)) von 104,5 sowie einer Viskosität von 23250 mPas (Brookfield, 20 UpM).

Beispiel 5:

In einem Reaktor, der mit Rückflußkühler, Rührer, Zudosiermöglichkeiten, Stickstoffeinleitung sowie Heiz- und Kühlmöglichkeiten versehen war, wurden 409 g entmineralisiertes Wasser, 7,5 g eines Nonylphenolpolyglykolethers (mit im Mittel 23 EO-Einheiten), 3 g eines $C_{15}$-Alkylsulfonates, 24 g Natriumvinylsulfonat, 6 g Acrylamid und 12 g Acrylsäure vorgelegt und der pH-Wert mit konzentrierter Ammoniaklösung auf 3,5 eingestellt. In diese Lösung wurden 407 g Vinylacetat, 222 g Vinyllaurat und 63 g 2-Ethylhexylacrylat einemulgiert. Es wurde auf 50°C aufgeheizt und mit der Dosierung einer 4,6 %igen Ammoniumpersulfatlösung (10,5 ml/h) und einer 2,5 %igen Natriumformaldehydsulfoxylatlösung (10,5 ml/h) begonnen. Nach Reaktionsbeginn wurde über einen Zeitraum von 4,5 h ein Gemisch von 237 g 2-Ethylhexylacrylat, 110 g Methylmethacrylat, 19 g Hydroxyethylacrylat und 18 g Acrylsäure (Dosierung 1) sowie weitere 11,5 g des Nonylphenolpolyglykolethers, 0,8 g des Alkylsulfates in 31 g entmineralisiertem Wasser (Dosierung 2) kontinuierlich zudosiert. Nach Ende der Dosierungen 1 und 2 wurde in einer weiteren Dosierung 3 über einen Zeitraum von 2 h eine Lösung von 7,4 g N-Methylolacrylamid in 10 g Wasser zudosiert. Die Dosierung der Ammoniumpersulfatlösung und der Natriumformaldehydsulfoxylatlösung wurde danach noch 1 Stunde lang fortgesetzt.

Nach dem Abkühlen erhielt man eine stabile Dispersion mit einem Festgehalt von 65,0 %, einem K-Wert (nach Fikentscher, 1 % in Tetrahydrofuran/Wasser 93:7 (V/V)) von 101 sowie einer Viskosität von 5600 mPas (Brookfield, 20 UpM).

Vergleichsbeispiel A:

Man verfuhr wie in Beispiel 1. In der Vorlage wurden aber 423 g Vinylacetat, 40 g 2-Ethylhexylacrylat und 155 g Vinyllaurat einemulgiert. Die Dosierung 1 bestand aus 152 g 2-Ethylhexylacrylat, 40 g Methylmethacrylat, 15 g Hydroxyethylacrylat und 14 g Acrylsäure. Die Zusammensetzung der restlichen Vorlage und der Dosierungen war wie in Beispiel 1.

Nach dem Abkühlen erhielt man eine stabile Dispersion mit einem Festgehalt von 60 %, einem K-Wert (nach Fikentscher, 1 % in Tetrahydrofuran/Wasser 93:7 (V/V)) von 107, sowie einer Viskosität von 1800 mPa.s (Brookfield Rheometer, 20 UpM).

Vergleichsbeispiel B:

Man verfuhr wie in Beispiel 1. In der Vorlage wurden aber 405 g Vinylacetat, 40 g 2-Ethylhexylacrylat und 203 g Vinyllaurat einemulgiert. Die Dosierung 1 bestand aus 161 g 2-Ethylhexylacrylat, 15 g Hydroxyethylacrylat und 14 g Acrylsäure. Die Zusammensetzung der restlichen Vorlage und der Dosierungen war wie in Beispiel 1.

Nach dem Abkühlen erhielt man eine stabile Dispersion mit einem Festgehalt von 60 %, einem K-Wert von 113 sowie einer Viskosität von 1880 mPa.s (Brookfield Rheometer, 20 UpM).

Vergleichsbeispiel C:

Man verfuhr wie in Beispiel 2. In der Vorlage wurden aber 481 g Vinylacetat, 34 g 2-Ethylhexylacrylat und 161 g Vinyllaurat einemulgiert. Die Dosierung 1 wurde verändert zu 127 g 2-Ethylhexylacrylat, 41,5 g Methylmethacrylat, 14,5 g Hydroxyethylacrylat und 2,5 g Acrylsäure. Die Zusammensetzung der restlichen Vorlage und der Dosierungen war wie in Beispiel 2.

Nach dem Abkühlen erhielt man eine stabile Dispersion mit einem Festgehalt von 60,9 %, einem K-Wert von 115 und einer Viskosität von 9400 mPa.s (Brookfield Rheometer, 20 UpM).

Vergleichsbeispiel D:

Man verfuhr wie in Beispiel 2. In der Vorlage wurden aber 548 g Vinylacetat, 168 g Vinyllaurat und 26,5 g 2-Ethylhexylacrylat einemulgiert. Die Dosierung 1 wurde verändert zu 100 g 2-Ethylhexylacrylat, 14,5 g Hydroxyethylacrylat und 2,5 g Acrylsäure. Die Zusammensetzung der restlichen Vorlage und der Dosierungen war wie in Beispiel 2.

Nach dem Abkühlen erhielt man eine stabile Dispersion mit einem Festgehalt von 60,9 %, einem K-Wert von 115 sowie einer Viskosität von 1200 mPa.s (Brookfield Rheometer, 20 UpM).

Anwendungstechnische Prüfung:

Es kamen folgende Bestimmungsmethoden zur Anwendung:

Schälstandfestigkeit (bei 23°C und 50 % relative Feuchtigkeit)

Die beispielsgemäßen wäßrigen Kontaktklebstoffe und die Dispersionen der Vergleichsbeispiele wurden auf 20 x 2 cm² große Buchenstäbchen in einer Schichtdicke von 100 µm naß, entsprechend 75 g/m² trocken, aufgetragen und 45 Minuten unter Normklima (23°C, 50 % relative Luftfeuchtigkeit) getrocknet. Anschließend wurde ein PVC-Streifen mit einer Fläche von 15,5 x 2 cm² so auf das Buchenstäbchen aufgelegt, daß die Klebstoffbeschichtungen miteinander in Kontakt gerieten und nun mit einer 3,5 kg schweren Stahlwalze durch fünfmaliges Hin- und Herrollen angepreßt. Das Aufkleben erfolgte so, daß das freie Ende des PVC-Streifens an einer Querseite des Buchenstäbchens überstand. Man befestigte sofort ein Gewicht von 300 g am freien Ende des PVC-Streifens und fixierte das Buchenstäbchen mit dem PVC-Streifen auf der Unterseite auf eine Weise, daß sich zwischen verklebtem und freiem Ende des PVC-Streifens ein Winkel von 90° einstellte. Die Befestigung des Gewichtes war so ausgebildet, daß die Kraft gleichmäßig über die gesamte Breite des PVC-Streifens wirkte. Man stellte die Zeit fest, in der der PVC-Streifen unter der konstanten Belastung von 300 g auf einer Strecke von 10 cm abschälte. Dazu wurde nach einer Prüfzeit von einem, drei und sieben Tagen die geschälte Strecke ausgemessen und der Quotient aus Prüfzeit in Minuten und Schälstrecke in Zentimetern gebildet. In Tabelle 3 sind die Meßwerte der Schälstandfestigkeiten nach einem, drei und sieben Tagen aufgeführt. Die angegebenen Werte sind Mittelwerte aus jeweils drei Einzelmessungen.

Scherstandfestigkeit (bei 23°C und 50 % relative Feuchtigkeit)

Die beispielsgemäßen wäßrigen Kontaktklebstoffe und die Dispersionen der Vergleichsbeispiele wurden auf Buchenholz-Probekörpern mit Abmessungen von 7 x 2 x 0,5 cm in einer Schichtdicke von 100 μm naß aufgebracht und 20 Minuten unter Normklima getrocknet. Anschließend wurden zwei Probekörper so zusammengelegt, daß die Klebstoffbeschichtungen miteinander in Kontakt gerieten und sich eine überlappte Klebefläche von 4 cm² ausbildete. Die so fixierten Probekörper wurden 10 Sekunden mit einem Druck von 0,2 N/mm² zusammengepreßt. Die auf diese Weise hergestellten Verklebungen wurden 24 Stunden unter Normklima gelagert. Anschließend wurden die Probekörper vertikal befestigt und im Winkel von 180° mit einem Gewicht von 2 kg belastet. Die bis zum Bruch der Klebverbindungen verstrichene Zeit in Minuten wurde festgehalten. In Tabelle 2 sind die Meßwerte für die Scherstandfestigkeit aufgeführt. Die angegebenen Werte sind Mittelwerte aus jeweils drei Einzelmessungen.

Wärmescherstandfestigkeit (als Funktion der Temperatur f(T))

Die beispielsgemäßen wäßrigen Kontaktklebstoffe und die Dispersionen der Vergleichsbeispiele wurden auf Buchenholz-Probekörpern mit Abmessungen von 7 x 2 x 0,5 cm in einer Schichtdicke von 100 μm aufgebracht und 20 Minuten unter Normklima getrocknet. Anschließend wurden zwei Probekörper so zusammengelegt, daß die Klebstoffbeschichtungen miteinander in Kontakt gerieten und sich eine überlappte Klebefläche von 4 cm² ausbildete. Die so fixierten Probekörper wurden 10 Sekunden mit einem Druck von 0,2 N/mm² zusammengepreßt. Die auf diese Weise hergestellten Verklebungen wurden 24 Stunden unter Normklima gelagert. Anschließend wurden die Probekörper vertikal in einem auf 50°C vorgewärmten Trockenschrank befestigt und im Winkel von 180° mit einem Gewicht von 2 kg belastet. Alle 60 Minuten wurde die Temperatur des Trockenschrankes um 25°C erhöht. Die beim Bruch der Klebverbindung herrschende Temperatur und die verstrichene Zeit in Minuten wurden festgehalten. In Tabelle 2 sind die Meßwerte für die Wärmescherstandfestigkeit aufgeführt. Die angegebenen Werte sind Mittelwerte aus drei Einzelmessungen.

Reißfestigkeit (bei 23°C und 50 % relative Feuchtigkeit)

Die beispielsgemäßen wäßrigen Kontaktklebstoffe und die Dispersionen der Vergleichsbeispiele wurden auf Buchenholz-Probekörpern mit Abmessungen von 12,3 x 3 x 0,3 cm in einer Schichtdicke von 100 μm naß aufgebracht und 30 Minuten unter Normklima getrocknet. Anschließend wurden zwei Probekörper so zusammengelegt, daß die Klebstoffbeschichtungen miteinander in Kontakt gerieten und sich eine überlappte Klebefläche von 9 cm² ausbildete. Die so fixierten Probekörper wurden 10 Sekunden mit einem Druck von 0,8 N/mm² zusammengepreßt. Die Reißfestigkeit in N/mm² der auf diese Weise hergestellten Prüfkörper wurde sofort und nach dreitägiger Lagerung unter Normklima mittels einer Zugprüfmaschine (Materialprüfmaschine 1445 der Fa. Zwick) bei einer Geschwindigkeit von 50 mm/min. bestimmt. In Tabelle 1 sind die Meßwerte für die Reißfestigkeiten nach entsprechender Lagerung aufgeführt. Die angegebenen Werte sind Mittelwerte aus jeweils sechs Einzelmessungen.

Schälfestigkeit (bei 23°C und 50 % relative Feuchtigkeit)

Die beispielsgemäßen wäßrigen Kontaktklebstoffe und die Dispersionen der Vergleichsbeispiele wurden auf 20 x 2 cm² große PVC-Streifen (DIN-PVC-Belag) und auf 15,5 x 2 cm² große Buchenstäbchen in einer Schichtdicke von 100 μm naß, entsprechend 75 g/m² trocken, aufgetragen und 45 Minuten unter Normklima (23°C, 50 % relative Luftfeuchtigkeit) getrocknet. Anschließend wurde der PVC-Streifen mit einer Fläche von 15,5 x 2 cm² so auf das Buchenstäbchen aufgelegt, daß die Klebstoffbeschichtungen miteinander in Kontakt gerieten und nun mit einer 3,5 kg schweren Stahlwalze durch fünfmaliges Hin- und Herrollen angepreßt. Die auf diese Weise hergestellten Prüfkörper wurden sofort oder nach 3-tägiger Lagerung unter Normklima in einer Zugprüfmaschine (Materialprüfmaschine 1445 der Fa. Zwick) eingespannt und durch Abziehen in einem Winkel von 90° mit einer Geschwindigkeit von 300 min/cm getrennt. Die Schälfestigkeit ist die dazu aufzuwendende Kraft in N/cm. In Tabelle 1 sind die Meßwerte für die Schälfestigkeit nach entsprechender Lagerung aufgeführt. Die angegebenen Werte sind Mittelwerte aus drei Einzelmessungen.

Ergebnisse der Prüfungen:

Die Untersuchung der in den Beispielen 1 und 2, sowie in den Vergleichsbeispielen A bis D hergestellten Dispersionen mit den oben beschriebenen Testmethoden (Reißfestigkeit, Schälfestigkeit, Scherstandfestigkeit, Schälstandfestigkeit und Wärmescherstandfestigkeit) ergab die in den Tabellen 1 bis 3 dargestellten Ergebnisse.

Erläuterung der Prüfergebnisse:

Beispiel 1:

Verklebungen, die auf dieser Dispersion beruhen, sind scherstandfest (Tab. 2) und zeigen eine Schälstandfestigkeit von ca. 5300 min/cm. Bei erhöhter Temperatur scheren die Verklebungen bei 75°C nach 10 Minuten ab. Aus Tab. 3 ist ersichtlich, daß die Verklebungen nach 3 Tagen schälstandfest werden (keine Änderung der abgeschälten Strecke mehr, wenn nach 7 Tagen erneut gemessen wird). Der Übergangsbereich der Glastemperatur des Harzes liegt bei ca. -5°C.

Beispiel 2:

Verklebungen, die auf dieser Dispersion beruhen, sind scherstandfest und zeigen eine Schälstandfestigkeit von ca. 1100 min/cm. Bei erhöhter Temperatur schert die Verklebung bei 50°C nach 48 Minuten ab. Aus Tab. 3 ist ersichtlich, daß die Verklebungen eine Verlangsamung der Schälrate über einen Zeitraum von 7 Tagen aufweisen. Der Übergangsbereich der Glastemperatur liegt bei ca. +5°C.

Beispiel 3:

In diesem Beispiel wird das Vinyllaurat durch VeoVa-9 ersetzt. Die Verklebungen sind scherstandfest und weisen eine Schälstandfestigkeit von ca. 1700 min/cm auf.

Vergleichsbeispiel A:

Bei diesem Versuch wurde der prozentuale Anteil an Methylmethacrylat im Vergleich zu Beispiel 1 auf die Hälfte reduziert. Die Zusammensetzung der anderen Monomere wurde so gewählt, daß der Temperaturbereich des Glasüberganges gleich blieb. Verklebungen, die mit dieser Dispersion hergestellt wurden, sind nicht mehr scherstandfest und weisen eine deutlich geringere Schälstandfestigkeit als Beispiel 1 auf. Verklebungen mit dieser Dispersion werden auch nach einigen Tagen nicht schälstandfest.

Vergleichsbeispiel B:

Bei diesem Versuch wurde kein Methylmethacrylat eingesetzt. Die Zusammensetzung der anderen Monomere wurde so gewählt, daß der Temperaturbereich des Glasüberganges wie in Beispiel 1 lag. Verklebungen, die mit dieser Dispersion hergestellt wurden, sind nicht scherstandfest und weisen nur sehr geringe Schälstandfestigkeit auf.

Vergleichsbeispiel C:

Bei diesem Versuch wurde der prozentuale Anteil an Methylmethacrylat im Vergleich zu Beispiel 2 auf die Hälfte reduziert. Die Zusammensetzung der anderen Monomere wurde so gewählt, daß der Temperaturbereich des Glasüberganges wie in Beispiel 2 lag. Verklebungen, die mit dieser Dispersion hergestellt wurden, weisen keine Scher- oder Schälstandfestigkeit auf.

Vergleichsbeispiel D:

Bei diesem Versuch wurde kein Methylmethacrylat eingesetzt. Die Zusammensetzung der anderen Monomere wurde so gewählt, daß der Temperaturbereich des Glasüberganges wie in Beispiel 2 lag. Verklebungen, die mit dieser Dispersion hergestellt wurden, weisen keinerlei Scher- oder Schälstandfestigkeit auf.

## Tabelle 1: Reiß- und Schälfestigkeitsprüfungen

| Beispiel | Reißfestigkeit Holz/Holz [N/mm$^2$] | | Schälfestigkeit PVC/Holz [N/cm] | |
|---|---|---|---|---|
| | Raumtemp.(Anf.) | Raumtemp.(3d) | Raumtemp.(Anf.) | Raumtemp.(3d) |
| 1 | 1,00 | 2,80 | 7,40 | 20,30 |
| 2 | 0,90 | 2,20 | 6,00 | 13,10 |
| 3 | 0,76 | 2,37 | 10,50 | 11,10 |
| 4 | 1,00 | 2,70 | 8,60 | 21,40 |
| 5 | 1,00 | 2,20 | 10,40 | 21,50 |
| A | 1,00 | 1,90 | 14,60 | 21,10 |
| B | 0,90 | 1,70 | 9,20 | 20,10 |
| C | 0,70 | 1,30 | 10,20 | 12,70 |
| D | 0,50 | 0,80 | 5,70 | 8,00 |

EP 0 547 507 B1

## Tabelle 2: Scherstand- und Schälstandfestigkeitsprüfungen

| Beispiel | Scherstandfestigkeit Holz/Holz | | Schälstandfestigkeit PVC/Holz [min/cm] |
| --- | --- | --- | --- |
| | Normklima [min] | f(T) [T/min] | Raumtemperatur |
| 1 | > 8000 | 75/10 | 5305 |
| 2 | > 8000 | 50/48 | 1133 |
| 3 | > 8000 | 75/6 | 1708 |
| 4 | > 8000 | 75/30 | 10610 |
| 5 | > 8000 | 75/40 | 3600 |
| A | 1500 | 50/30 | 2520 |
| B | 248 | 50/5 | 631 |
| C | 15 | 50/2 | 3 |
| D | 2 | 50/0 | 0 |

EP 0 547 507 B1

**Tabelle 3: Zeitliche Entwicklung der Schälstandfestigkeit**

| Beispiel | Schälstandfestigkeit | | | | | |
| --- | --- | --- | --- | --- | --- | --- |
| | 1 Tag | | 3 Tage | | 7 Tage | |
| | cm | min/cm | cm | min/cm | cm | min/cm |
| 1 | 1,1 | 1309 | 1,9 | 2274 | 1,9 | 5305 |
| 2 | 5,2 | 277 | 6,5 | 665 | 8,9 | 1133 |
| 3 | 3,0 | 480 | 5,2 | 831 | 5,9 | 1708 |
| 4 | 0,85 | 1694 | 0,9 | 4800 | 0,95 | 10610 |
| 5 | 1,25 | 1152 | 1,8 | 2400 | 2,8 | 3600 |
| A | 1,0 | 1440 | 2,0 | 2160 | 4,0 | 2520 |
| B | 3,25 | 443 | 4,8 | 600 | 6,85 | 631 |
| C | 10,0 | 3 | – | – | – | – |
| D | schält sofort | – | – | – | – | – |

## Patentansprüche

1. Wäßrige Kontaktkleberdispersionen, die, bezogen auf das Gesamtgewicht der Dispersion, 40 bis 70 Gewichtsprozent eines Copolymerisates enthalten, welches nach dem Emulsionspolymerisationsverfahren hergestellt wird, dessen Temperaturbereich des Glasüberganges im Bereich von -20 bis +20°C liegt und dessen K-Wert nach Fikentscher zwischen 50 und 180 liegt, dadurch gekennzeichnet, daß das Copolymerisat

a) 40 bis 70 Gew.-% Vinylester von aliphatischen Carbonsäuren mit 2 bis 12 C-Atomen,
b) 10 bis 40 Gew.-% Acrylsäureester von aliphatischen Alkoholen mit 4 bis 12 C-Atomen,
c) 8 bis 15 Gew.-% Methacrylsäureester von aliphatischen Alkoholen mit 4 bis 12 C-Atomen,
d) 0,1 bis 3 Gew.-% ethylenisch ungesättigte, vernetzend wirkende Verbindungen,
e) 0,1 bis 5 Gew.-% ethylenisch ungesättigte Carbonsäuren,
f) 0,1 bis 2 Gew.-% substituierte und unsubstituierte (Meth)acrylamide,
g) 0,5 bis 3 Gew.-% ethylenisch ungesättigte Hydroxyalkylfunktionelle Verbindungen,
h) 0,5 bis 3 Gew.-% ethylenisch ungesättigte Sulfate und/oder Sulfonate

enthält, wobei die Angaben in Gewichtsprozent jeweils auf das Gesamtgewicht des Copolymerisats bezogen sind und sich die Anteile in Gewichtsprozent im Copolymerisat auf 100 Gew.-% aufaddieren.

2. Wäßrige Kontaktkleberdispersionen nach Anspruch 1, dadurch gekennzeichnet, daß als Vinylester (a) Vinylacetat, Vinylpropionat, Vinyllaurat oder Vinylester der Versatic-Säuren mit 9 C-Atomen oder Gemische der genannten Monomere enthalten sind.

3. Wäßrige Kontaktkleberdispersionen nach Anspruch 1 oder 2, dadurch gekennzeichnet, daß als Acrylsäureester (b) n-Butylacrylat oder 2-Ethylhexylacrylat oder deren Gemische enthalten sind.

4. Wäßrige Kontaktkleberdispersionen nach Anspruch 1, 2 oder 3, dadurch gekennzeichnet, daß als Methacrylsäureester (c) Methylmethacrylat, tert.-Butylmethacrylat, Ethylmethacrylat, n-Propylmethacrylat, i-Propylmethacrylat oder Gemische der genannten Monomere enthalten sind.

5. Wäßrige Kontaktkleberdispersionen nach Anspruch 1, 2, 3 oder 4, dadurch gekennzeichnet, daß als ethylenisch ungesättigte, vernetzend wirkende Verbindungen (d) Acrylamidoglykolsäure (AGA), Methylacrylamidoglykolsäuremethylester (MAGME), 2-Acrylamido-2-Methylpropansulfonsäure (AMPS), N-Methylolacrylamid, N-Methylolmethacrylamid, N-Methylolallylcarbamat, Alkylether oder Ester des N-Methylolacrylamids, des N-Methylolmethacrylamids oder des N-Methylolallylcarbamats enthalten sind.

6. Wäßrige Kontaktkleberdispersionen nach Anspruch 1, 2, 3, 4 oder 5, dadurch gekennzeichnet, daß als ethylenisch ungesättigte Carbonsäuren (e) Acrylsäure oder Methacrylsäure enthalten sind.

7. Wäßrige Kontaktkleberdispersionen nach Anspruch 1, 2, 3, 4, 5 oder 6, dadurch gekennzeichnet, daß als Comonomer (f) Acrylamid enthalten ist.

8. Wäßrige Kontaktkleberdispersionen nach Anspruch 1, 2, 3, 4, 5, 6 oder 7, dadurch gekennzeichnet, daß als Comonomer (g) 2-Hydroxyethylacrylat oder 2-Hydroxypropylacrylat enthalten ist.

9. Wäßrige Kontaktkleberdispersionen nach Anspruch 1, 2, 3, 4, 5, 6, 7 oder 8, dadurch gekennzeichnet, daß als Comonomer (h) Alkalisalze der Vinylsulfonsäure enthalten sind.

10. Verfahren zur Herstellung von wäßrigen Kontaktkleberdispersionen nach einem der Ansprüche 1 bis 9 im Emulsionspolymerisationsverfahren unter Verwendung üblicher wasserlöslicher Radikalbildner in einer Menge von 0,05 bis 3 Gew.-%, bezogen auf die Gesamtmonomermasse, und in Gegenwart von üblichen Emulgatoren in einer Menge von 1 bis 5 Gew.-%, bezogen auf Gesamtmasse der Dispersion, dadurch gekennzeichnet, daß
die Komponente a) vollständig vorgelegt oder teilweise dosiert wird,
die Komponenten (b) und (c) zu wenigstens 50 Gew.-% erst während der Reaktion dosiert werden,
die Komponente (d) entweder teilweise vorgelegt und dosiert, oder vollständig dosiert wird,
die Komponente (e) vollständig dosiert, teilweise vorgelegt und teilweise dosiert oder vollständig vorgelegt wird,
die Komponenten (f) und (h) vollständig vorgelegt werden, und
die Komponente (g) vollständig dosiert wird.

11. Verwendung der wäßrigen Kontaktkleberdispersion nach einem der obengenannten Ansprüche zur Verklebung von Substraten, wobei die zu verklebenden Substrate an den Klebeflächen mit der Kontaktkleberdispersion beschichtet werden und nach Auftrocknung der Dispersion unter Anwendung von Druck verklebt werden.

**Claims**

1. Aqueous contact adhesive dispersions which contain, based on the total weight of the dispersion, from 40 to 70 % by weight of a copolymer which has been prepared by emulsion polymerization, whose glass transition temperature is in the range from -20 to +20°C and whose Fikentscher K value is between 50 and 180, characterized in that the copolymer contains
   a) from 40 to 70% by weight of vinyl esters of aliphatic carboxylic acids having 2 to 12 carbon atoms,
   b) from 10 to 40% by weight of acrylic acid esters of aliphatic alcohols having 4 to 12 carbon atoms,
   c) from 8 to 15% by weight of methacrylic acid esters of aliphatic alcohols having 4 to 12 carbon atoms,
   d) from 0.1 to 3% by weight of ethylenically unsaturated compounds which cause cross-linking,
   e) from 0.1 to 5% by weight of ethylenically unsaturated carboxylic acids,
   f) from 0.1 to 2% by weight of substituted and unsubstituted (meth)acrylamides,
   g) from 0.5 to 3% by weight of ethylenically unsaturated hydroxyalkyl-functional compounds
   h) from 0.5 to 3% by weight of ethylenically unsaturated sulphates and/or sulphonates
   where the data in percent by weight are in each case based on the total weight of the copolymer, and the proportions in percent by weights in the copolymer add up to 100% by weight.

2. Aqueous contact adhesive dispersions according to Claim 1, characterized in that the vinyl enters (a) are vinyl acetate, vinyl propionate, vinyl laurate or vinyl esters of the Versatic acids having 9 carbon atoms, or a mixture of said monomers.

3. Aqueous contact adhesive dispersions according to Claim 1 or 2, characterized in that the acrylic acid esters (b) are n-butyl acrylate or 2-ethylhexyl acrylate, or a mixture thereof.

4. Aqueous contact adhesive dispersions according to Claim 1, 2 or 3, characterized in that the methacrylic acid esters (c) are methyl methacrylate, tert-butyl methacrylate, ethyl methacrylate, n-propyl methacrylate, or i-propyl methacrylate, or a mixture of said monomers.

5. Aqueous contact adhesive dispersions according to Claim 1, 2, 3 or 4, characterized in that the ethylenically unsaturated compounds (d) which cause crosslinking are acrylamidoglycolic acid (AGA), methylacrylamidoglycolic acid methyl ester (MAGME), 2-acrylamido-2-methylpropanesulphonic acid (AMPSA), N-methylolacrylamide, N-methylolmethacrylamide, N-methyololallyl carbamate, alkyl ethers or esters of N-methylolacrylamide, of N-methylolmethacrylamide or of N-methylolallyl carbamate.

6. Aqueous contact adhesive dispersions according to Claim 1, 2, 3, 4 or 5, characterized in that the ethylenically unsaturated carboxylic acids (e) are acrylic acid or methacrylic acid.

7. Aqueous contact adhesive dispersions according to Claim 1, 2, 3, 4, 5 or 6, characterized in that the comonomer (f) is acrylamide.

8. Aqueous contact adhesive dispersions according to Claim 1, 2, 3, 4, 5, 6 or 7, characterized in that the comonomer (g) is 2-hydroxyethyl acrylate or 2-hydroxypropyl acrylate.

9. Aqueous contact adhesive dispersions according to Claim 1, 2, 3, 4, 5, 6, 7 or 8, characterized in that the comonomers (h) are alkali metal salts of vinylsulphonic acid.

10. Process for the preparation of aqueous contact adhesive dispersions according to any of Claims 1 to 9 by emulsion polymerization using conventional water-soluble free-radical formers in an amount of 0.05 to 3% by weight, based on the total weight of the monomers, and in the presence of conventional emulsifiers in an amount of from 1 to 5% by weight, based on the total weight of the dispersion, characterized in that all of component (a) is introduced initially or partially metered in,
    at least 50% by weight of components (b) and (c) are not metered in until during the reaction,
    either some of component (d) is introduced initially and some metered in or all metered in, component (e) is all metered in, some introduced initially and some metered in, or all introduced initially, all of components (f) and (h) are introduced initially, and all of component (g) is metered in.

11. Use of the aqueous contact adhesive dispersion according to one of the preceding claims for bonding substrates, the substrates to be bonded being coated on the adhesive areas with the contact adhesive dispersion and bonded using pressure after the dispersion has dried on.

**Revendications**

1. Dispersions aqueuses d'adhésifs de contact qui, par rapport au poids total de la dispersion, contiennent de 40 à 70 % en poids d'un copolymère préparé par le procédé de polymérisation en émulsion, dont l'intervalle de température de transition vitreuse est compris entre -20 et +20°C et dont la valeur K selon Fikentscher est comprise entre 50 et 180, caractérisées en ce que le copolymère contient

   a) de 40 à 70 % en poids d'esters vinyliques d'acides carboxyliques aliphatiques ayant de 2 à 12 atomes de carbone,
   b) de 10 à 40 % en poids d'acrylates d'alcools aliphatiques ayant de 4 à 12 atomes de carbone,
   c) de 8 à 15 % en poids de méthacrylates d'alcools aliphatiques ayant de 4 à 12 atomes de carbone,
   d) de 0,1 à 3 % en poids de composés à insaturation éthylénique et à effet réticulant,
   e) de 0,1 à 5 % en poids d'acides carboxyliques à insaturation éthylénique,
   f) de 0,1 à 2 % en poids de (méth)acrylamides éventuellement substitués,
   g) de 0,5 à 3 % en poids de composés à fonctionnalité hydroxyalkyle et à insaturation éthylénique,
   h) de 0,5 à 3 % en poids de sulfates et/ou sulfonates à insaturation éthylénique,
   les indications de pourcentage en poids se rapportant dans tous les cas au poids total du copolymère, les pourcentages en poids dans le copolymère faisant un total de 100 %.

2. Dispersions aqueuses d'adhésifs de contact selon la revendication 1, caractérisées en ce qu'elles contiennent en tant qu'ester vinylique (a) de l'acétate de vinyle, du propionate de vinyle, du laurate de vinyle ou des esters vinyliques des acides versatiques ayant 9 atomes de carbone, ou des mélanges de ces monomères.

3. Dispersions aqueuses d'adhésifs de contact selon la revendication 1 ou 2, caractérisées en ce qu'elles contiennent en tant qu'acrylates (b) de l'acrylate de n-butyle ou de l'acrylate de 2-éthylhexyle ou leurs mélanges.

4. Dispersions aqueuses d'adhésifs de contact selon les revendications 1, 2 ou 3, caractérisées en ce qu'elles contiennent en tant que méthacrylates (c) du méthacrylate de méthyle, du méthacrylate de tertbutyle, du méthacrylate d'éthyle, du méthacrylate de n-propyle, du méthacrylate d'isopropyle ou des mélanges de ces monomères.

5. Dispersions aqueuses d'adhésifs de contact selon les revendications 1, 2, 3 ou 4, caractérisées en ce qu'elles contiennent en tant que composés à insaturation éthylénique et à effet réticulant (d) l'acide acrylamidoglycolique (AGA), le méthacrylamidoglycolate de méthyle (MAGME), l'acide 2-acrylamido-2-méthylpropanesulfonate (AMPS), le N-méthylolacrylamide, le N-méthylolméthacrylamide, le carbamate de N-méthylolallyle, les oxydes d'alkyle ou les esters du N-méthylolacrylamide, du N-méthylolméthacrylamide ou du carbamate de N-méthylolallyle.

6. Dispersions aqueuses d'adhésifs de contact selon les revendications 1, 2, 3, 4 ou 5, caractérisées en ce qu'elles contiennent en tant qu'acides carboxyliques à insaturation éthylénique (e) l'acide acrylique ou l'acide méthacrylique.

7. Dispersions aqueuses d'adhésifs de contact selon les revendications 1, 2, 3, 4, 5 ou 6, caractérisées en ce qu'elles contiennent en tant que monomère (f) de l'acrylamide.

8. Dispersions aqueuses d'adhésifs de contact selon les revendications 1, 2, 3, 4, 5, 6 ou 7, caractérisées en ce qu'elles contiennent en tant que monomères (g) de l'acrylate de 2-hydroxyéthyle ou de l'acrylate de 2-hydroxypropyle.

9. Dispersions aqueuses d'adhésifs de contact selon les revendications 1, 2, 3, 4, 5, 6, 7 ou 8, caractérisées en ce qu'elles contiennent comme monomère (h) des sels de métaux alcalins de l'acide vinylsulfonique.

10. Procédé pour préparer des dispersions aqueuses d'adhésifs de contact selon l'une des revendications 1 à 9 par le procédé de polymérisation en émulsion, par utilisation d'amorceurs radicalaires usuels solubles dans l'eau en une quantité de 0,05 à 3 % en poids par rapport à la masse totale des monomères, et en présence d'émulsifiants usuels en une quantité de 1 à 5 % en poids par rapport à la masse totale de la dispersion, caractérisé en ce qu'on place dans un réacteur tout ou partie du composant (a), on ajoute les composants (b) et (c), en une quantité d'au moins 50 % en poids, seulement au cours de la réaction, on

14

place dans le réacteur ou on ajoute une partie du composant (d), ou on en ajoute la totalité, on en ajoute la totalité, on en ajoute en partie et on met en partie dans le réacteur, ou encore on met en totalité dans le réacteur le composant (e), on met en totalité dans le réacteur les composants (f) et (h), et on ajoute la totalité du composant (g).

11. Utilisation de la dispersion aqueuse d'adhésif de contact selon l'une des revendications ci-dessus pour coller des substrats, les substrats à coller recevant sur leur surface de liaison par collage une couche de la dispersion d'adhésif de contact, et, après séchage de la dispersion, étant collés par application d'une pression.